# EUROPEAN PATENT APPLICATION

(11) **EP 3 379 410 A1**
(43) Date of publication of application: **26.09.2018**
(21) Application number: 17174978.1
(22) Date of filing: 08.06.2017
(51) Int. Cl.: G06F 9/44, B25J 9/16

(54) **ICON-BASED PROGRAMMABLE CONTROL METHOD FOR A MECHANICAL CONTROL SYSTEM**

(30) Priority: 20.03.2017 TW 106109176
(71) Applicant: NORDBOTICS INC., Hukou Township, Hsinchu County 303 (TW)
(72) Inventor: WINKELMANN, Ringo Daniel, 12555 Berlin (DE)
(74) Representative: Viering, Jentschura & Partner mbB Patent- und Rechtsanwälte

(57) **Abstract**

An icon-based programmable control method for a mechanical control system (S) is disclosed, wherein the mechanical control system (S) includes an electronic device (E), a mechanical device (M), and an image retrieving device (V), the icon-based programmable method comprising: activating a programmable control interface (1) through the electronic device (E), moving at least one function icon (111) of the plurality of function icons (111) from the icon list area (11) to the ready-to-perform area (12) on the display unit (D); and activating a perform icon (13) on the display unit (D) so that the control module (C) executes at least one operation program corresponding to the at least one function icon (111) moved to the ready-to-perform area (12) and one of the mechanical device (M) and the image retrieving device (V) performs at least one operation corresponding to the at least one function icon (111) according to at least one command given by the at least one operation program.

## Description

### BACKGROUND OF THE INVENTION

### 1. Field of the Invention

The instant disclosure relates to an icon-based programmable control method; in particular, to an icon-based programmable control method for a mechanical control system.

### 2. Description of Related Art

Robots and robot arms are widely applied to the automation of manufacturing processes in the manufacturing industry. The main function of a robot arm is to act as a substitute for human arms and do repetitive or demanding works so as to increase productivity and reduce labor costs.

An industrial robot or robot arm is mainly composed of a machine body, a motor, at least one robot arm working element, a programmable logic controller, and a user interface. Robot arm working elements are installed on the front end of the robot arm and can include a suction disk, a welding head, a gripper, a spray gun, etc. The programmable logic controller can control the robot arm via receiving and sending digital signals or analog signals.

As technology advances, the application of robot arms has become prevalent in industry. However, setting up and controlling a robot arm in the prior art involves complicated programming and program integration. Accordingly, only experienced programmers who had undergone training in operating robots are qualified to be a robot arm operator, which increases the labor costs. Besides, installing a camera on a robot arm to monitor the operation of the robot arm is a common requirement in automated industries. Nevertheless, to integrate a camera into a robot arm control system requires intricate programming skills as well, and thus is costly in terms of time and personnel requirements. Therefore, the conventional robot arm controlling system is to be improved.

### SUMMARY OF THE INVENTION

Accordingly, the object of the instant disclosure is to provide an icon-based programmable control method that simplifies the method for controlling a mechanical control system.

In order to achieve the aforementioned objects, the instant disclosure provides an icon-based programmable control method for a mechanical control system, in which the mechanical control system includes an electronic device, a mechanical device, and an image retrieving device, the icon-based programmable method comprising: activating a programmable control interface through the electronic device, in which the programmable control interface is displayed on a display unit of the electronic device, the programmable control interface having an icon list area and a ready-to-perform area, the icon list area including a plurality of function icons representing different functions, each function icon corresponding to an operation program stored in a control module of the electronic device, and the operation program corresponding to an operation of one of the mechanical device and the image retrieving device; moving at least one function icon of the plurality of function icons from the icon list area to the ready-to-perform area on the display unit; and activating a perform icon on the display unit so that the control module performs at least one operation program corresponding to the at least one function icon moved to the ready-to-perform area and one of the mechanical device and the image retrieving device performs at least one operation corresponding to the at least one function icon according to at least one command given by the at least one operation program.

According to another embodiment of the instant disclosure, an icon-based programmable control method for a mechanical control system is provided, in which the mechanical control system includes an electronic device, a mechanical device, and an image retrieving device, the icon-based programmable method comprising: activating a programmable control interface through the electronic device, in which the programmable control interface is displayed on a display unit of the electronic device, the programmable control interface having an icon list area and a ready-to-perform area, the icon list area including a plurality of function icons representing different functions, each function icon corresponding to an operation program stored in a control module of the electronic device, and the operation program corresponding to an operation of one of the mechanical device and the image retrieving device; moving at least two function icons of the plurality of function icons from the icon list area to the ready-to-perform area on the display unit; and activating a perform icon on the display unit so that the control module performs at least two operation programs corresponding to the at least two function icons moved to the ready-to-perform area and one of the mechanical device and the image retrieving device performs at least two operations corresponding to the at least two function icons according to at least two commands given by the at least two operation programs.

The instant disclosure is advantageous in that the icon-based programmable control method includes the technical means of "moving at least one function icon from the icon list area to the ready-to-perform area on the display unit" and "activating a perform icon on the display unit so that the control module performs at least one operation program corresponding to the at least one function icon moved to the ready-to-perform area" in a manner such that one of the mechanical device and the image retrieving device performs at least one operation corresponding to the at least one function icon according to at least one command given by the at least one operation program. Through the above means, the operation of the mechanical control system can be performed by moving the function icons displayed on the display unit from the icon list area to the ready-to-perform area and executing the operation programs corresponding to the function icons moved to the ready-to-perform area, whereby a simplified control method for controlling the mechanical control system is achieved. Moreover, with the technical means in which the mechanical control system S includes the electronic device, mechanical device, and the image retrieving device, and the technical means in which each function icon corresponds to an operation program stored in the electronic device and corresponding to an operation of one of the mechanical device or the image retrieving device, the instant disclosure achieves the integration of a camera system into a robot system.

In order to further the understanding of the instant disclosure, the following embodiments are provided along with illustrations to facilitate the disclosure of the instant disclosure.

### BRIEF DESCRIPTION OF THE DRAWINGS

Fig. 1 is a flow chart illustrating an icon-based programmable control method according to the first embodiment of the instant disclosure.
Fig. 2 is a schematic diagram illustrating a programmable control interface according to the first embodiment of the instant disclosure.
Fig. 3 is a flow chart illustrating an icon-based control method according the second embodiment of the instant disclosure.
Fig. 4 is a schematic diagram illustrating a translational-motion control sub-interface according to the second embodiment of the instant disclosure.
Fig. 5 is a schematic diagram illustrating a rotational-motion control sub-interface according to the second embodiment of the instant disclosure.
Figs. 6A and 6B show a flow chart illustrating an icon-based programmable control method according to the third embodiment of the instant disclosure.
Fig. 7 is a schematic diagram illustrating a device configuration sub-interface according to the third embodiment of the instant disclosure.
Fig. 8 is a schematic diagram illustrating a task assigning sub-interface according to the third embodiment of the instant disclosure.
Fig. 9 is a flow chart illustrating an icon-based programmable control method according to the fourth embodiment of the instant disclosure.
Fig. 10 is a schematic diagram illustrating a programmable control interface according to the fourth embodiment of the instant disclosure.
Fig. 11 is a functional block diagram of the mechanical control system to which the icon-based programmable control method of the instant disclosure is applied.

### DETAILED DESCRIPTION OF THE PREFERRED EMBODIMENTS

The aforementioned illustrations and following detailed descriptions are exemplary for the purpose of further explaining the scope of the instant disclosure. Other objectives and advantages related to the instant disclosure will be illustrated in subsequent descriptions and appended drawings.

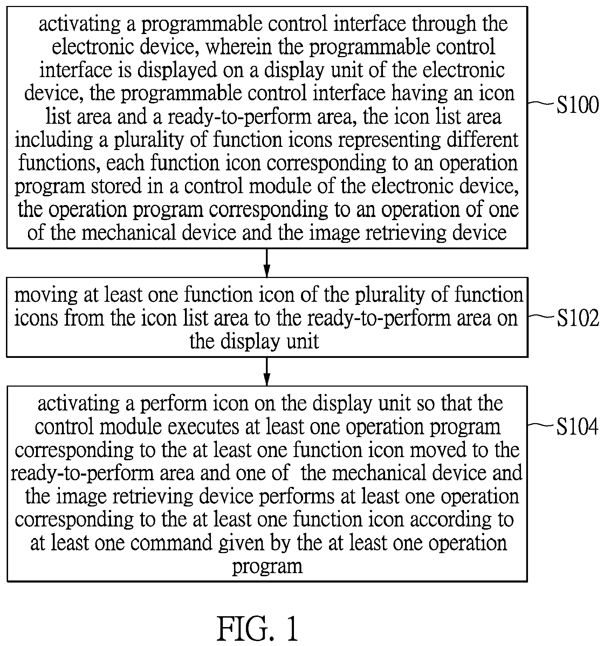

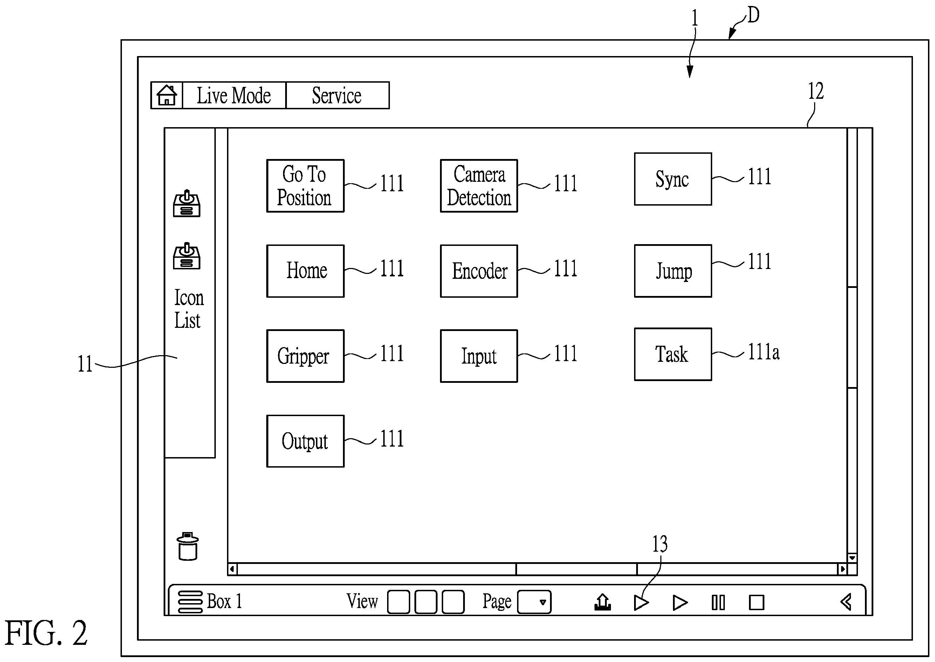

Please refer to Fig. 1 and Fig. 2. According to the first embodiment of the instant disclosure, an icon-based programmable control method for a mechanical control system S is provided. The mechanical control system S includes an electronic device E, a mechanical device M, and an image retrieving device V. The icon-based programmable control method comprises a step S100 of activating a programmable control interface 1 through the electronic device E, wherein the programmable control interface 1 is displayed on a display unit D of the electronic device E. The programmable control interface 1 has an icon list area 11 and a ready-to-perform area 12, in which the icon list area 11 includes a plurality of function icons 111 representing different functions, and each function icon 111 corresponds to an operation program stored in a control module C of the electronic device E. The operation program corresponds to an operation of one of the mechanical device M or the image retrieving device V. For example, the icon list area can includes a plurality of function icons 111 that represent operations of the mechanical device M such as robot arm going to position, robot arm returning to home position, gripper operation, spray gun operation, and vacuuming, and operations of the image retrieving device V such as capturing pictures of processed or non-processed workpieces. These operations of the mechanical device and the image retrieving device V are performed through the execution of the corresponding operation programs by the control module.

Next, the icon-based programmable control method according to the first embodiment further comprises a step S102 of moving at least one function icon 111 from the icon list area 11 to the ready-to-perform area 12 on the display unit D. Specifically, in the present embodiment, the way of moving a function icon 111 to the ready-to-perform area 12 is to click on a function icon 111 and drag it to the ready-to-perform area 12 and then drop the function icon 111 onto the ready-to-perform area 12.

Furthermore, the icon-based programmable control method according to the first embodiment further comprises a step S104 of activating a perform icon 13 on the display unit D so that the control module C executes at least one operation program corresponding to the at least one function icon 111 moved to the ready-to-perform area 12 and one of the mechanical device M and the image retrieving device V performs at least one operation corresponding to the at least one function icon 111 according to at least one command given by the at least one operation program. Specifically, if a user performs step S102 in which a function icon 111 corresponding to an operation of the mechanical device M is moved to the ready-to-perform area 12, the control module C executes an operation program corresponding the operation of the mechanical device M; if a user performs step S102 in which a function icon 111 corresponding to an operation of the image retrieving device V is moved to the ready-to-perform area 12, the control module C executes an operation program corresponding the operation of the image retrieving device V.

Through the above means, the icon-based programmable control method can control the mechanical device M or the image retrieving device V by clicking on, dragging, and dropping the function icon on the programmable control interface and then activating the perform icon. In this way, the instant disclosure dispenses with complicated programming that is necessary in the prior art, simplifying the way of controlling mechanical devices.

Moreover, the mechanical device M includes at least one robot arm R and the image retrieving module V includes at least one camera disposed on the at least one robot arm. The operation of the mechanical device M is a robot arm operation of the at least one robot arm R, and the operation of the image retrieving device V is an image retrieval operation of the at least one camera. Specifically, the robot arm operation of the robot arm can be rotating or shifting the robot arm, or the operations of the robot arm working elements F, such as gripping with a gripper, welding with a welding head, and spraying with a spray gun. Furthermore, the image retrieval operation can be the camera taking pictures of workpieces, the camera recording the operation of one of the working elements F of the robot arm R, browsing the pictures having been taken by the camera, etc. Through the technical means stated above, the instant disclosure achieves the integration of camera functionality into robot systems, which means with the mechanical control system S using the icon-based programmable control method, the control of the mechanical device M and that of the image retrieving device V can be accomplished in the mechanical control system S.

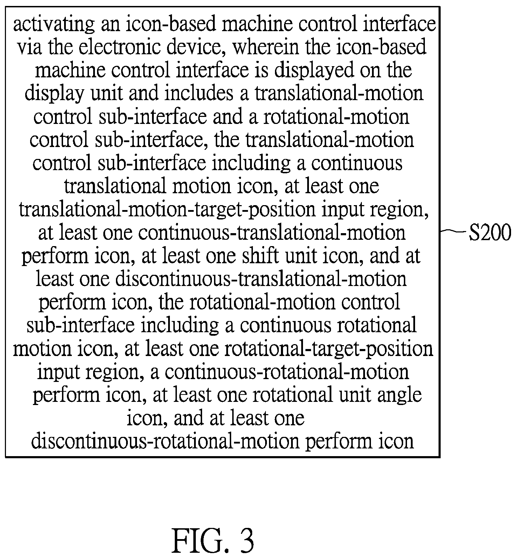

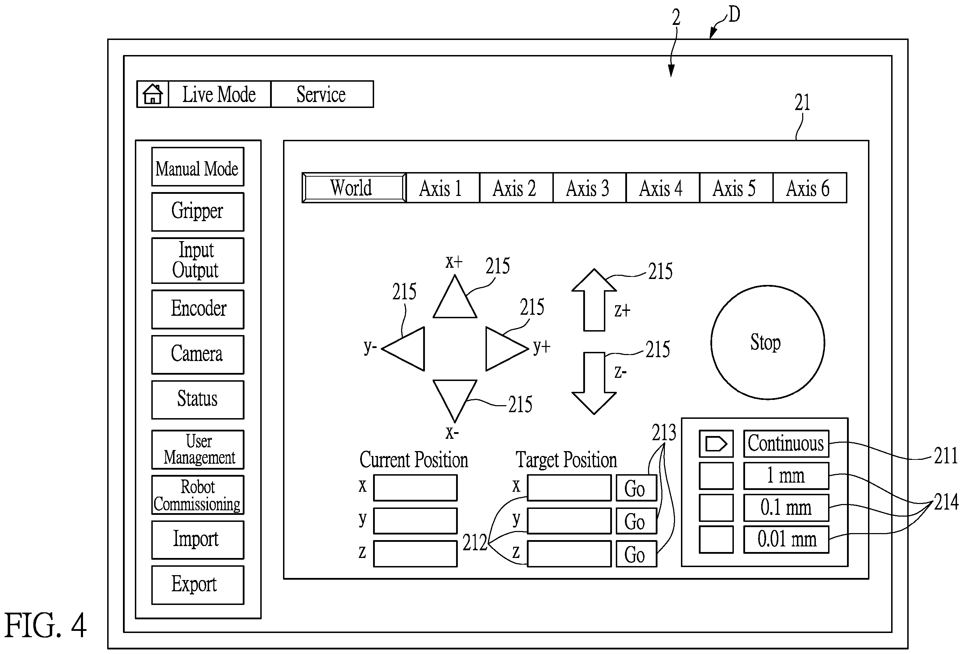

Please refer to Fig. 3 to Fig. 5, which illustrate the icon-based programmable control method according to the second embodiment of the instant disclosure. In the present embodiment, the icon-based programmable control method includes a step S200 of activating an icon-based machine control interface 2 via the electronic device E, in which the icon-based machine control interface 2 is displayed on the display unit D and includes a translational-motion control sub-interface 21 and a rotational-motion control sub-interface 22. The translational-motion control sub-interface 21 includes a continuous translational motion icon 211, at least one Translational-motion-target-position input region 212, at least one continuous-translational-motion perform icon 213, at least one shift unit icon 214, and at least one discontinuous-translational-motion perform icon 215. The rotational-motion control sub-interface 22 includes a continuous rotational motion icon 221, at least one rotational-target-position input region 222, a continuous-rotational-motion perform icon 223, at least one rotational unit angle icon 224, and at least one discontinuous-rotational-motion perform icon 225.

An operator of the mechanical control system can manually control the mechanical device via the icon-based machine control interface. When the robot arm needs to be moved from one place to another, the operator can activate the translational-motion control sub-interface, entering the target position in the translational-motion-target-position input region and clicking on the continuous-translational-motion perform icon, upon which the robot arm of the mechanical device will conduct a translational motion without halting. Alternatively, if the operator wishes to move the robot arm step by step, the operator can, after entering the target position, select a shift unit by clicking on the shift unit icon and then click on the discontinuous-translational-motion perform icon so that the robot arm can move the distance of the shift unit per operation.

The rotational-motion control sub-interface functions similarly as the translational-motion control sub-interface. The difference therebetween is that the translational-motion control sub-interface controls the translational motion of the robot arm while the rotational-motion control sub-interface controls the rotational motion of the robot arm. In addition, in this embodiment, the robot arm has six rotational axes, and there are six rotational-motion control sub-interfaces which correspond to the six axes of robot arm respectively. The present embodiment shows the rotational-motion control sub-interface that corresponds to the first axis of the robot arm. However, the instant disclosure is not limited to the aforementioned. In other embodiments, the robot arm can have a different number of rotational axes, and the number of rotational-motion control sub-interface depends thereon.

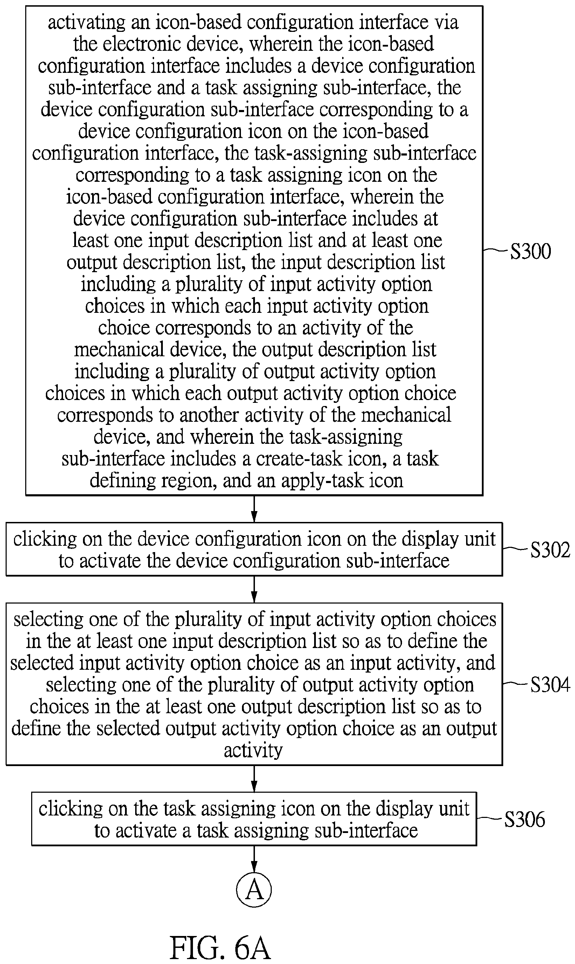

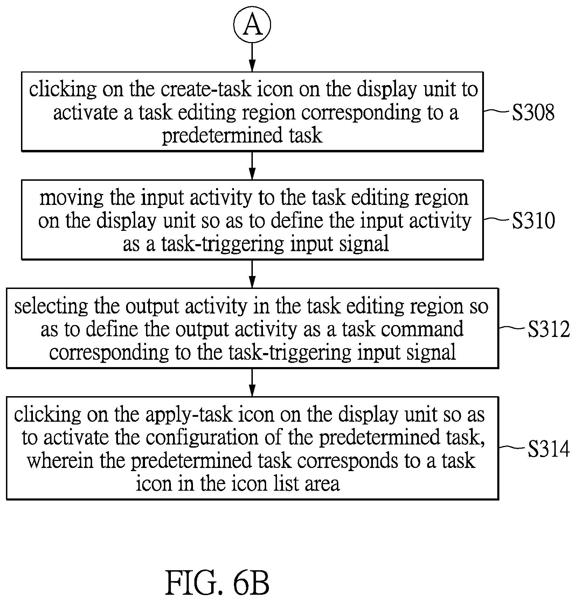

Please refer to Fig. 6 to Fig. 8, which illustrate the icon-based programmable control method according to the third embodiment of the instant disclosure. In this embodiment, the icon-based programmable control method includes a step S300 of activating an icon-based configuration interface 3 via the electronic device E, in which the icon-based configuration interface 3 includes a device configuration sub-interface 31 and a task assigning sub-interface 32. The device configuration sub-interface 31 corresponds to a device configuration icon 310 on the icon-based configuration interface 3, and the task-assigning sub-interface 32 corresponds to a task assigning icon 320 on the icon-based configuration interface 3. The device configuration sub-interface 31 includes at least one input description list 311 and at least one output description list 312. The input description list 311 includes a plurality of input activity option choices (not shown in the drawings) in which each input activity option choice corresponds to an activity of the mechanical device M. The output description list 312 includes a plurality of output activity option choices (not shown in the drawings) in which each output activity option choice corresponds to another activity of the mechanical device M. The task-assigning sub-interface 32 includes a create-task icon 321, a task defining region 322, and an apply-task icon 323.

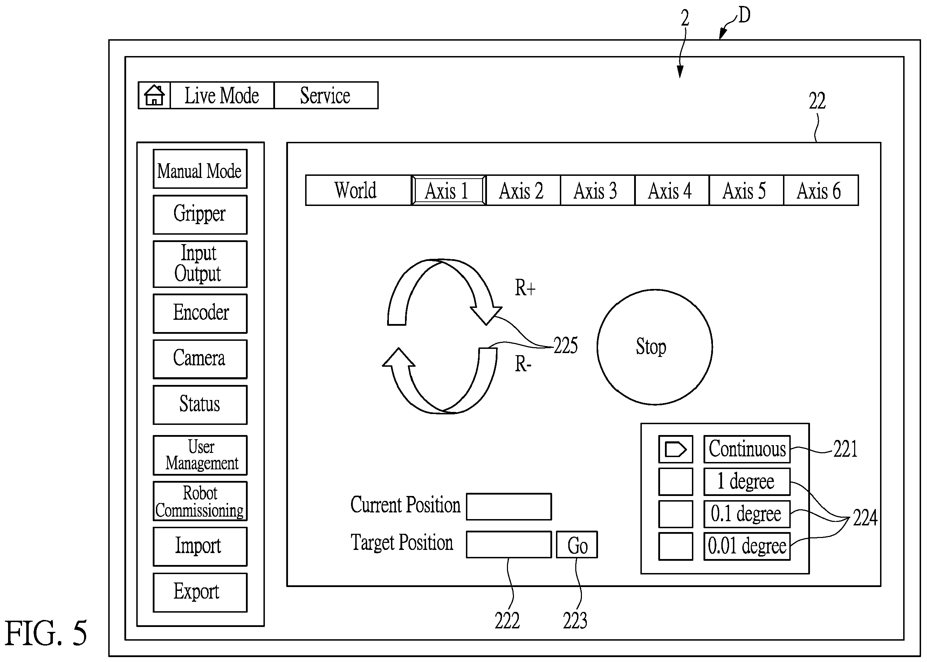

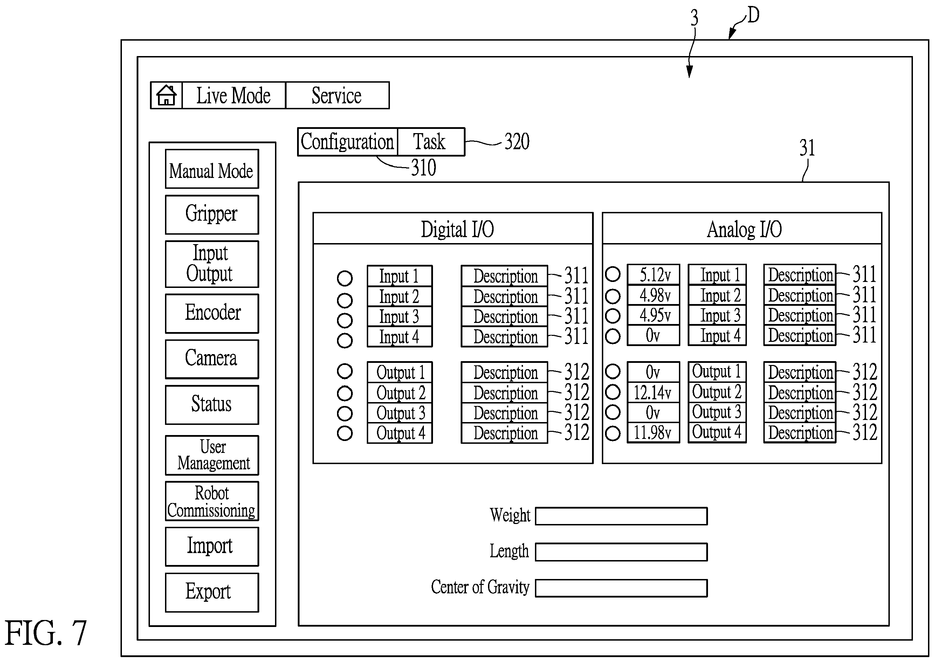

After step S300, the icon-based programmable control method according to the third embodiment of the instant disclosure further includes a step S302 of clicking on the device configuration icon 310 on the display unit D to activate the device configuration sub-interface 31. Please refer to Fig. 5. The icon-based configuration interface is applicable to any robot arm working element. In this embodiment, a gripper is installed on the robot arm as a robot arm working element, and the device configuration sub-interface of the icon-based configuration interface serves to configure the gripper in the mechanical control system. As shown in Fig. 7, both digital input/output and analog input/output are used to trigger the operation of the robot arm working element. However, the instant disclosure is not limited to this.

Next, after step S302, the icon-based programmable control method further includes a step S304 of selecting one of the plurality of input activity option choices in the at least one input description list 311 so as to define the selected input activity option choice as an input activity, and selecting one of the plurality of output activity option choices in the at least one output description list 312 so as to define the selected output activity option choice as an output activity. Specifically, the input activity and the output activity can be an operation of the robot arm working element. For instance, in this embodiment, the input activity can be the on/off status of the gripper, and the output activity can be a grip action or a release action.

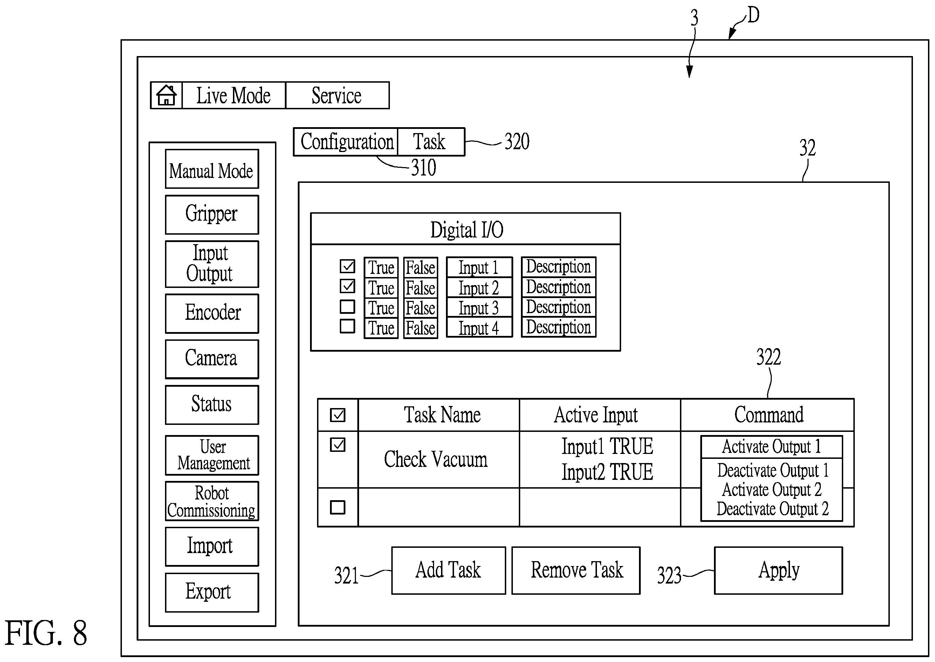

Moreover, after step S304, the icon-based programmable control method according to the third embodiment of the instant disclosure further includes a step S306 of clicking on the task assigning icon 320 on the display unit D to activate a task assigning sub-interface 32, a step S308 of clicking on the create-task icon 321 on the display unit D to activate a task editing region 322 corresponding to a predetermined task, and a step S310 of moving the input activity to the task editing region 322 on the display unit D so as to define the input activity as a task-triggering input signal. As shown in Fig. 8, in this embodiment, the way of moving the input activity to the task editing region 322 is to check the boxes next to input 1 and input 2 such that when input 1 and input 2 are true, the signal of input 1 together with the signal of input 2 act as a task-triggering input signal. Afterwards, step S310 is followed by a step S312 of selecting the output activity in the task editing region 322 so as to define the output activity as a task command corresponding to the task-triggering input signal. As shown in Fig. 8, the task command can be activate output 1 or deactivate output 1. Lastly, step S312 is further followed by a step S314 of clicking on the apply-task icon 323 on the display unit D so as to activate the configuration of the predetermined task, in which the predetermined task corresponds to a task icon 111a in the icon list area 11.

The above explains the implementation of the icon-based configuration interface on configuring the robot arm working element in the mechanical control system. However, the instant disclosure is not limited to this. The icon-based configuration interface of the instant disclosure is also applicable to the configuration of other components of the mechanical device, such as an LED, a lamp, a motor, a switch, or a sensor.

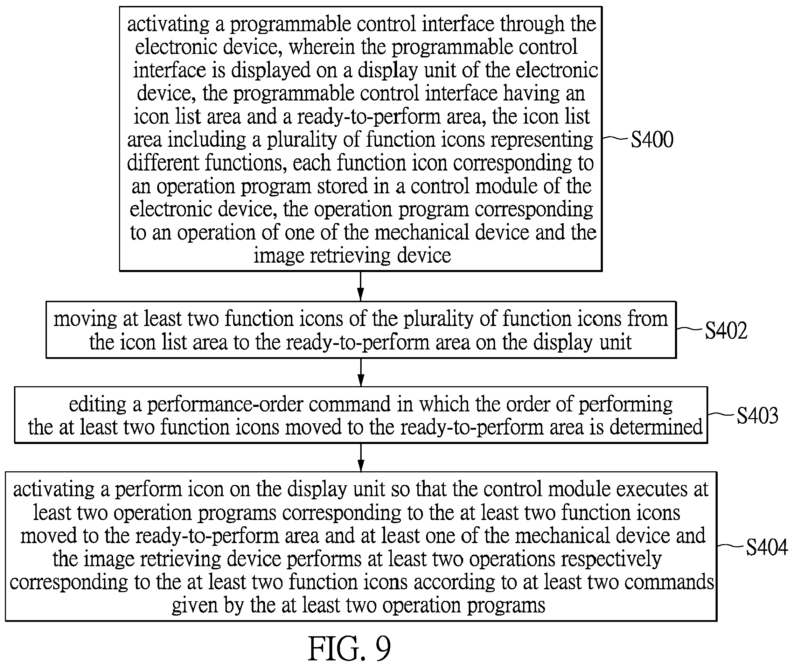

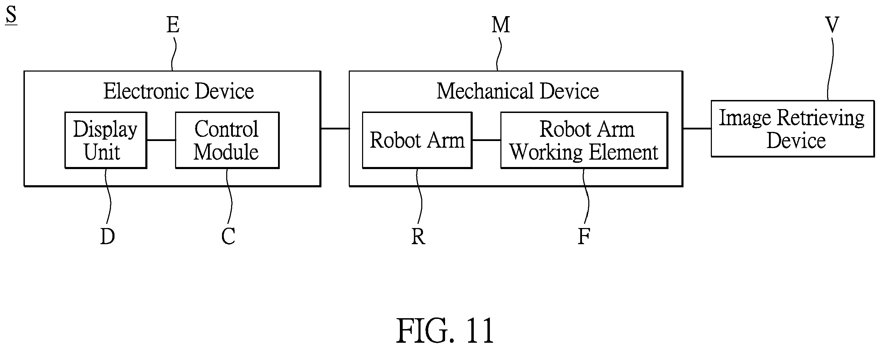

Referring to Fig. 9 and Fig. 11, the mechanical control system S includes an electronic device E, a mechanical device M, and an image retrieving device V. The icon-based programmable control method in this embodiment comprises a step S400 of activating a programmable control interface 1 through the electronic device E, in which the programmable control interface 1 is displayed on a display unit D of the electronic device E. The programmable control interface 1 has an icon list area 11 and a ready-to-perform area 12, and the icon list area 12 includes a plurality of function icons 111 representing different functions in which each function icon 111 corresponds to an operation program stored in a control module C of the electronic device E. The operation program corresponds to an operation of one of the mechanical device M and the image retrieving device V. Next, step S400 is followed by a step S402 of moving at least two function icons 111 from the icon list area 11 to the ready-to-perform area 12 on the display unit D and a step S404 of activating a perform icon 13 on the display unit D so that the control module C executes at least two operation programs corresponding to the at least two function icons 111 moved to the ready-to-perform area 12 and at least one of the mechanical device M or the image retrieving device V performs at least two operations respectively corresponding to the at least two function icons 111 according to at least two commands given by the at least two operation programs.

The icon-based programmable control method of the present embodiment is similar to that of the first embodiment, and the difference therebetween is that in the present embodiment, at least two function icons 111 are moved to the ready-to-perform area 12 while in the first embodiment, at least one function icon 111 is moved to the ready-to-perform area 12, which means an operator can move only one function icon 111 from the icon list area 11 to the ready-to-perform area 12 in the first embodiment.

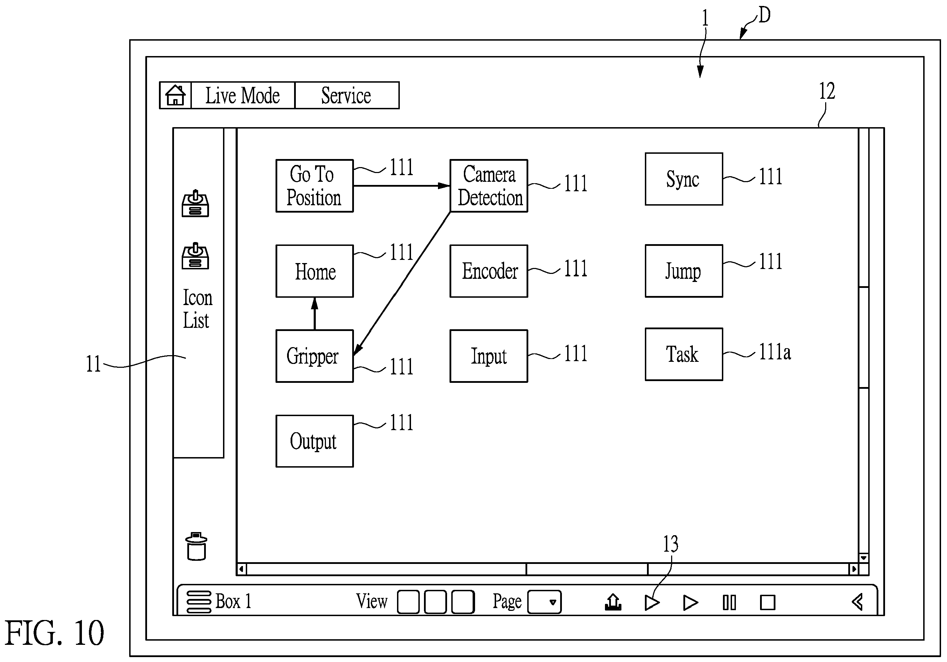

Furthermore, in the present embodiment, the icon-based programmable control method can further includes a performance-order command editing step S403 after the step of moving at least two function icons to the ready-to-perform area (S402): editing a performance-order command in which the order of performing the at least two function icons 111 moved to the ready-to-perform area 12 is determined. As shown in Fig. 10, in the present embodiment, the following actions are performed in sequence according to the performance-order command: moving the robot arm to an operational position (corresponding to the "go to position" icon in Fig. 10), taking a picture with the image retrieving module (corresponding to the "camera detection" icon in Fig. 10), gripping and releasing working pieces with the gripper (corresponding to the "gripper" icon in Fig. 10), and moving the robot arm back to the original position (corresponding to the "home" icon in Fig. 10). More specifically, the control module executes the operation programs corresponding to the function icons 111 in sequence according to the performance-order command.

In summary, the instant disclosure is advantageous in that the icon-based programmable control method includes the technical means of "moving at least one function icon 111 from the icon list area 11 to the ready-to-perform area 12 on the display unit D" and "activating a perform icon 13 on the display unit D so that the control module C performs at least one operation program corresponding to the at least one function icon 111 moved to the ready-to-perform area 12" in a manner such that the mechanical device M performs at least one operation corresponding to the at least one function icon 111 according to at least one command given by the at least one operation program. Through the above means, the operation of the mechanical control system S can be performed by moving the function icons 111 displayed on the display unit D from the icon list area 11 to the ready-to-perform area 12 and executing the operation programs corresponding to the function icons 111 moved to the ready-to-perform area 12, whereby a simplified control method for controlling the mechanical control system S is achieved. Moreover, with the technical means in which the mechanical control system S includes the electronic device, mechanical device, and the image retrieving device, and the technical means in which each function icon corresponds to an operation program stored in the electronic device and corresponding to an operation of one of the mechanical device or the image retrieving device, the present disclosure achieves the integration of a camera system into a robot system.

The descriptions illustrated *supra* set forth simply the preferred embodiments of the instant disclosure; however, the characteristics of the instant disclosure are by no means restricted thereto. All changes, alterations, or modifications conveniently considered by those skilled in the art are deemed to be encompassed within the scope of the instant disclosure delineated by the following claims.

## Claims

1. An icon-based programmable control method for a mechanical control system (S), wherein the mechanical control system (S) includes an electronic device (E), a mechanical device (M), and an image retrieving device (V), the icon-based programmable method being **characterized by** comprising:
activating a programmable control interface (1) through the electronic device (E), wherein the programmable control interface (1) is displayed on a display unit of the electronic device (E), the programmable control interface (1) having an icon list area (11) and a ready-to-perform area (12), the icon list area (11) including a plurality of function icons (111) representing different functions, each function icon (111) corresponding to an operation program stored in a control module (C) of the electronic device (E), the operation program corresponding to an operation of one of the mechanical device (M) and the image retrieving device (V);
moving at least one function icon (111) of the plurality of function icons (111) from the icon list area (11) to the ready-to-perform area (12) on the display unit (D); and
activating a perform icon (13) on the display unit (D) so that the control module (C) executes at least one operation program corresponding to the at least one function icon (111) moved to the ready-to-perform area (12), and one of the mechanical device (M) and the image retrieving device (V) performs at least one operation corresponding to the at least one function icon (111) according to at least one command given by the at least one operation program.

2. The icon-based programmable control method according to claim 1, wherein the mechanical device (M) includes at least one robot arm (R), and the image retrieving device (V) includes at least one camera disposed on the at least one robot arm (R), the icon-based programmable control method being **characterized in that** the operation of the mechanical device (M) is a robot arm (R) operation of the at least one robot arm (R), and the operation of the image retrieving device (V) is an image retrieval operation of the at least one camera.

3. The icon-based programmable control method according to claim 1, **characterized by** further comprising:
activating an icon-based machine control interface (2) via the electronic device (E), wherein the icon-based machine control interface (2) is displayed on the display unit (D) and includes a translational-motion control sub-interface (21) and a rotational-motion control sub-interface (22), the translational-motion control sub-interface (21) including a continuous translational motion icon (211), at least one translational-motion-target-position input region (212), at least one continuous-translational-motion perform icon (213), at least one shift unit icon (214), and at least one discontinuous-translational-motion perform icon (215), the rotational-motion control sub-interface (22) including a continuous rotational motion icon (221), at least one rotational-target-position input region (222), a continuous-rotational-motion perform icon (223), at least one rotational unit angle icon (224), and at least one discontinuous-rotational-motion perform icon (225).

4. The icon-based programmable control method according to claim 1, **characterized by** further comprising:
activating an icon-based configuration interface (3) via the electronic device (E), wherein the icon-based configuration interface (3) includes a device configuration sub-interface (31) and a task assigning sub-interface, the device configuration sub-interface (31) corresponding to a device configuration icon (310) on the icon-based configuration interface (3), the task-assigning sub-interface (32) corresponding to a task assigning icon (320) on the icon-based configuration interface (3), wherein the device configuration sub-interface (31) includes at least one input description list and at least one output description list (312), the input description list including a plurality of input activity option choices in which each input activity option choice corresponds to an activity of the mechanical device (M), the output description list (312) including a plurality of output activity option choices in which each output activity option choice corresponds to another activity of the mechanical device (M), and wherein the task-assigning sub-interface (32) includes a create-task icon (321), a task defining region, and an apply-task icon (323);
clicking on the device configuration icon (310) on the display unit (D) to activate the device configuration sub-interface (31);
selecting one of the plurality of input activity option choices in the at least one input description list so as to define the selected input activity option choice as an input activity, and selecting one of the plurality of output activity option choices in the at least one output description list (312) so as to define the selected output activity option choice as an output activity;
clicking on the task assigning icon (320) on the display unit (D) to activate a task assigning sub-interface;
clicking on the create-task icon (321) on the display unit (D) to activate a task editing region (322) corresponding to a predetermined task;
moving the input activity to the task editing region (322) on the display unit (D) so as to define the input activity as a task-triggering input signal;
selecting the output activity in the task editing region (322) so as to define the output activity as a task command corresponding to the task-triggering input signal; and
clicking on the apply-task icon (323) on the display unit (D) so as to activate the configuration of the predetermined task, wherein the predetermined task corresponds to a task icon (111a) in the icon list area (11).

5. An icon-based programmable control method for a mechanical control system, wherein the mechanical control system (S) includes an electronic device (E), a mechanical device (M), and an image retrieving device (V), the icon-based programmable method being **characterized by** comprising:
activating a programmable control interface (1) through the electronic device (E), wherein the programmable control interface (1) is displayed on a display unit (D) of the electronic device (E), the programmable control interface (1) having an icon list area (11) and a ready-to-perform area (12), the icon list area (11) including a plurality of function icons (111) representing different functions, each function icon (111) corresponding to an operation program stored in a control module (C) of the electronic device (E), the operation program corresponding to an operation of one of the mechanical device (M) and the image retrieving device (V);
moving at least two function icons (111) of the plurality of function icons (111) from the icon list area (11) to the ready-to-perform area (12) on the display unit (D); and
activating a perform icon (13) on the display unit (D) so that the control module (C) executes at least two operation programs corresponding to the at least two function icons (111) moved to the ready-to-perform area (12), and at least one of the mechanical device (M) and the image retrieving device (V) performs at least two operations respectively corresponding to the at least two function icons (111) according to at least two commands given by the at least two operation programs.

6. The icon-based programmable control method according to claim 5, wherein the mechanical device (M) includes at least one robot arm (R), and the image retrieving device (V) includes at least one camera disposed on the at least one robot arm (R), the icon-based programmable control method being **characterized in that** the operation of the mechanical device (M) is a robot arm (R) operation of the at least one robot arm (R), and the operation of the image retrieving device (V) is an image retrieval operation of the at least one camera.

7. The icon-based programmable control method according to claim 5, **characterized by** further comprising a performance-order command editing step after the step of moving at least two function icons (111) to the ready-to-perform area (12): editing a performance-order command in which the order of performing the at least two function icons (111) moved to the ready-to-perform area (12) is determined.

8. The icon-based programmable control method according to claim 7, **characterized in that** the control module (C) executes the at least two operation programs corresponding to the at least two function icons (111) moved to the ready-to-perform area (12) according to the performance-order command.

9. The icon-based programmable control method according to claim 5, **characterized by** further comprising:
activating an icon-based machine control interface (2) via the electronic device (E), wherein the icon-based machine control interface (2) is displayed on the display unit (D) and includes a translational-motion control sub-interface (21) and a rotational-motion control sub-interface (22), the translational-motion control sub-interface (21) including a continuous translational motion icon (211), at least one Translational-motion-target-position input region (212), at least one continuous-translational-motion perform icon (213), at least one shift unit icon (214), and at least one discontinuous-translational-motion perform icon (215), the rotational-motion control sub-interface (22) including a continuous rotational motion icon (221), at least one rotational-target-position input region (222), a continuous-rotational-motion perform icon (223), at least one rotational unit angle icon (224), and at least one and discontinuous-rotational-motion perform icon (225).

10. The icon-based programmable control method according to claim 5, **characterized by** further comprising:
activating an icon-based configuration interface (3) via the electronic device (E), wherein the icon-based configuration interface (3) includes a device configuration sub-interface (31) and a task assigning sub-interface, the device configuration sub-interface (31) corresponding to a device configuration icon (310) on the icon-based configuration interface (3), the task-assigning sub-interface (32) corresponding to a task assigning icon (320) on the icon-based configuration interface (3), wherein the device configuration sub-interface (31) includes at least one input description list and at least one output description list (312), the input description list including a plurality of input activity option choices in which each input activity option choice corresponds to an activity of the mechanical device (M), the output description list (312) including a plurality of output activity option choices in which each output activity option choice corresponds to another activity of the mechanical device (M), and wherein the task-assigning sub-interface (32) includes a create-task icon (321), a task defining region, and an apply-task icon (323);
clicking on the device configuration icon (310) on the display unit (D) to activate the device configuration sub-interface (31);
selecting one of the plurality of input activity option choices in the at least one input description list (311) so as to define the selected input activity option choice as an input activity, and selecting one of the plurality of output activity option choices in the at least one input description list (311) so as to define the selected output activity option choice as an output activity;
clicking on the task assigning icon (320) on the display unit (D) to activate a task assigning sub-interface;
clicking on the create-task icon (321) on the display unit (D) to activate a task editing region (322) corresponding to a predetermined task;
moving the input activity to the task editing region (322) on the display unit (D) so as to define the input activity as a task-triggering input signal;
selecting the output activity in the task editing region (322) so as to define the output activity as a task command corresponding to the task-triggering input signal; and
clicking on the apply-task icon (323) on the display unit (D) so as to activate the configuration of the predetermined task, wherein the predetermined task corresponds to a task icon (111a) in the icon list area (11).
